(19) Europäisches Patentamt / European Patent Office / Office européen des brevets

(11) **EP 3 699 255 A1**

(12) **DEMANDE DE BREVET EUROPEEN**

(43) Date de publication:
26.08.2020 Bulletin 2020/35

(51) Int Cl.:
*C09K 8/584* (2006.01)     *C09K 8/588* (2006.01)
*C09K 8/594* (2006.01)

(21) Numéro de dépôt: **19158711.2**

(22) Date de dépôt: **22.02.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeurs:
• **Rhodia Operations**
**93300 Aubervilliers (FR)**
• **IFP Energies nouvelles**
**92852 Rueil-Malmaison (FR)**

(72) Inventeurs:
• **Chevallier, Eloise**
**33000 Bordeaux (FR)**
• **Miralles, Vincent**
**33000 Bordeaux (FR)**
• **Morvan, Mikel**
**33600 Pessac (FR)**

(74) Mandataire: **Cordier, Pascal Christian**
**Rhodia Operations**
**Direction de la Propriété Industrielle**
**40, rue de la Haie Coq**
**93306 Aubervilliers (FR)**

(54) **FORMULATIONS MOUSSANTES POUR LA RECUPERATION ASSISTEE DU PETROLE**

(57) L'invention concerne une composition C qui comprend, au sein d'un milieu aqueux M :
- des tensioactifs propres à la formation d'une mousse en présence d'un gaz ; et
- des polymères P à base d'unités acrylamides ou acrylamido, ayant une masse moléculaire de 1 000 000 à 20 000 000 g/mol ;
où : la composition C a une **viscosité** inférieure à 6 mPa.s ; et

la teneur en polymère P est supérieure à la concentration limite au-delà de laquelle la viscosité apparente d'une mousse obtenue à partir de la composition C est supérieure d'au moins 10% à la viscosité apparente d'une mousse obtenue à partir de la même composition mais privée des polymères.

L'invention concerne par ailleurs l'utilisation de ces compositions à titre de compositions moussantes pour l'EOR.

EP 3 699 255 A1

**Description**

La présente invention a trait à la récupération assistée du pétrole brut des formations souterraines, et plus particulièrement aux techniques de récupération assistée du pétrole mettant en oeuvre des compositions moussantes ou des mousses.

Lors de l'extraction du pétrole hors d'un réservoir hydrocarboné (réservoir pétrolifère telle qu'une formation rocheuse, consolidée ou non, ou un sable, par exemple), selon une première étape dite de « récupération primaire », le pétrole est entraîné hors d'un puits de production par la surpression régnant naturellement au sein du réservoir. Cette récupération primaire ne permet d'accéder qu'à une faible quantité du pétrole contenu dans le réservoir, typiquement de l'ordre de 10 à 15% tout au plus.

Pour permettre de poursuivre l'extraction du pétrole suite à cette récupération primaire, des méthodes secondaires de production sont employées, quand la pression du réservoir devient insuffisante pour déplacer le pétrole encore en place. Typiquement, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le(s) puits de production. Une technique usuelle dans ce cadre est l'injection d'eau (désignée également par inondation ou « *waterflooding* ») ou l'injection de gaz (« gasflooding »), dans laquelle de grands volumes d'eau ou de gaz, respectivement, sont injectés sous pression dans le réservoir *via* des puits injecteurs. Cette injection induit l'entraînement d'une partie du pétrole rencontré par l'eau ou le gaz vers un ou plusieurs puits producteur(s). Les méthodes secondaires de production telles que l'injection d'eau ou de gaz précitées ne permettent toutefois d'extraire qu'une partie relativement faible des hydrocarbures en place (typiquement de l'ordre de 30%). Ce balayage partiel est dû notamment au piégeage de l'huile par les forces capillaires, aux différences de viscosité et de densité existant entre le fluide injecté et les hydrocarbures en place, ainsi qu'à des hétérogénéités à des échelles micro- ou macroscopiques (échelle des pores et aussi échelle du réservoir).

Pour essayer de récupérer le reste du pétrole, qui demeure dans les formations souterraines à l'issue de la mise en oeuvre des méthodes primaires et secondaires de production, il a été proposé différentes techniques dites de « récupération assistée du pétrole » (ou récupération assistée (ou améliorée) d'hydrocarbures RAH), qu'on désigne plus communément sous le terme « EOR » (pour l'anglais « *Enhanced Oil Recovery* »).

Parmi les techniques de l'EOR, certaines mettent en oeuvre des compositions de nature à former des mousses. Ces techniques peuvent employer des mousses préformées, ou bien alternativement des compositions moussantes capables de former une mousse *in situ* dans la formation souterraine où elles sont injectées, en présence d'un gaz (co- ou post-injecté ou bien présent dans la formation souterraine).

L'emploi de mousses ou de compositions moussantes en EOR vise le plus souvent à maximiser le balayage de la formation souterraine, en particulier pour accéder à des zones les moins accessibles qui seraient peu, voire pas du tout, balayées par des compositions non moussantes. En particulier, les techniques employant des mousses sont bien adaptées à des réservoirs fracturés naturellement (typiquement des réservoirs à base de carbonates). Les réservoirs naturellement fracturés se distinguent des réservoirs conventionnels qui peuvent présenter quelques fractures, par la densité et les dimensions des fractures qui forment un véritable réseau, ce qui induit une problématique de récupération du pétrole particulièrement compliquées.

Les techniques employant des mousses sont également bien adaptées à des réservoirs présentant des problèmes dits de contrôle de mobilité de gaz (« gas mobility control » en anglais) incluant notamment l'existence de chemin préférentiel ; et/ou de zone voleuse ; et/ou de phénomènes de type « *gravity override* » (écoulement multiphasique dû à des différences de densité) ; et/ou d'hétérogénéité de perméabilité. Pour plus de détails à ce sujet, on pourra par exemple se reporter à la revue "Mobility and conformance control for carbon dioxide enhanced Oil Recovery (CO2-EOR) via Thickeners, Foams and Gels - A detailed literature review of 40 years of research"; DOE/NETL- 2012/1540, Activity 4003.200.01 ; Enick R; Olsen, D ;. Décembre 2011

Dans les techniques employant des mousses, on cherche en général à augmenter la pression générée par la mousse sur la roche et dans les fractures de la roche. C'est en particulier le cas pour les réservoirs fracturés naturellement, où la cinétique de récupération d'huile est directement liée à la pression générée dans la fracture.

La performance d'une mousse dans le milieu poreux où elle est injectée peut être évaluée par la pression générée à un débit donné dans un milieu poreux donné, (notamment dans une fracture) ou bien par la viscosité apparente de la mousse, qui est directement corrélée à la différence de pression entre l'entrée et la sortie du milieu poreux où la mousse est injectée.

Un but de la présente invention est de fournir un moyen d'augmenter, à des coûts acceptables, la performance d'une composition moussante employée en EOR, en augmentant la viscosité apparente dans une formation souterraine d'une mousse formée à partir de cette composition.

A cet effet, il est proposé selon la présente invention d'ajouter, dans les compositions moussantes employées en EOR, une petite quantité de polymères spécifiques, dont les inventeurs ont maintenant établis qu'ils permettent, de façon inattendue, d'augmenter la viscosité apparente de la mousse, même à des teneurs très faibles qui n'induisent pas une augmentation sensible de la viscosité de la composition moussante employée pour former la mousse.

Il a maintenant été établi qu'avec les polymères utiles selon l'invention, il existe une concentration limite, très faible, au-delà de laquelle est obtenue une augmentation de la viscosité apparente de la mousse formée en présence de ces polymères (et donc de l'efficacité de cette mousse en EOR). Selon l'invention, on utilise le polymère à des teneurs supérieures à cette concentration limite à partir de laquelle le polymère s'avère efficace, mais en restant à des concentrations faibles en n'induisant pas une augmentation sensible de la viscosité de la composition moussante.

Plus précisément, selon un premier aspect, la présente invention a pour objet une composition C adaptée à titre de composition moussante pour l'EOR, qui comprend, au sein d'un milieu aqueux M :

- un tensioactif ou un mélange de tensioactifs propre à la formation d'une mousse en présence d'un gaz ; et

- un polymère P à base d'unités acrylamides ou acrylamido, ayant une masse moléculaire moyenne en poids $M_w$ allant de 1 000 000 à 20 000 000 g/mol ; ou un mélange de tels polymères P
où :

  ▪ la composition C a une viscosité, telle que mesurée à 25°C sous un taux de cisaillement de 10s$^{-1}$, qui est inférieure à 6 mPa.s (soit 6 cp) ;
  et

  ▪ en désignant par **C'** la composition identique à la composition C à la seule exception qu'elle ne contient pas de polymère P ; et par **C"** la composition identique à la composition C à la seule exception qu'elle ne contient pas de polymères P ni de tensioactif propre à la formation d'une mousse :

    (i) la teneur en polymère P dans la composition C est supérieure à la concentration limite au-delà de laquelle la viscosité apparente d'une mousse obtenue à partir de la composition C devient supérieure d'au moins 10% à la viscosité apparente d'une mousse obtenue à partir de la composition C' au moins dans certaines conditions ; et

    (ii) de préférence, la composition C' présente une viscosité telle que mesurée à 25°C sous un taux de cisaillement de 10s$^{-1}$ inférieure au quadruple de la viscosité de la composition C".

Ainsi, selon l'invention, le polymère P est employé à une teneur supérieure à celle où il a un effet notable sur l'augmentation de la viscosité apparente des mousses formées à partir de la composition C, mais en maintenant par ailleurs une teneur en polymère P et en tensioactifs suffisamment faible pour que la composition C présente une faible viscosité.

La composition C' à laquelle il est fait référence ci-dessus est une composition servant de point de comparaison, en tout point égale à la composition C mais privée uniquement des polymères P. Elle contient donc en particulier les tensioactifs présents dans la composition C, ainsi que le milieu aqueux M et les éventuels autres composés présents dans la composition C.

La composition C", qui sert également de point de comparaison, correspond quant à elle à la composition C privée uniquement des polymères P et des tensioactif propre à la formation d'une mousse. En d'autres termes, correspond à la composition C' privée uniquement des tensioactifs propres à former une mousse.

La viscosité apparente d'une mousse obtenue à partir d'une composition C selon l'invention (viscosité apparente notée $\eta_C$ dans le présent paragraphe à des fins concision) est supérieure à la viscosité apparente d'une mousse obtenue à partir de la composition C' telle que définie ci-dessus (viscosité notée $\eta_{C'}$ dans le présent paragraphe), et la teneur en polymère P est telle qu'il existe au moins certaines conditions où la viscosité apparente d'une mousse obtenue à partir de la composition C est supérieur d'au moins 10% à la viscosité d'une mousse obtenue à partir de la composition C', à savoir que le rapport ($\eta_C$-$\eta_{C'}$)/ $\eta_{C'}$ est supérieur ou égal à 10%. Selon un mode particulier, on emploie des compositions C où la teneur en polymère P est telle qu'il existe au moins certaines conditions où la viscosité apparente d'une mousse obtenue à partir de la composition C devient supérieure d'au moins 15%, voire d'au moins 20% à la viscosité apparente d'une mousse obtenue à partir de la composition C'. En d'autres termes, selon ces modes ($n_C$-$\eta_{C'}$)/ $\eta_{C'}$ est supérieur ou égal à 15%, voire à 20%.

Selon un mode intéressant, une composition selon l'invention est une composition où la teneur en polymère P est telle que cette condition sur les viscosités apparentes est vérifiées en particulier dans les conditions d'un test particulier. Plus précisément, une composition selon l'invention est typiquement une composition où la teneur en polymère P est telle que la viscosité apparente d'une mousse formée par la composition C mesurée dans les conditions d'un un test de sandpack :

- effectué en co-injectant la composition à tester avec du diazote et avec une fraction en gaz de 0,9

- employant un sable Ottawa de perméabilité supérieure à 1 darcy,

- avec une contre-pression de 50 bars à une température de 25°C et à une vitesse intersticielle de 100ft/d

est supérieure d'au moins 10%, de préférence d'au moins 15%, voire d'au moins 20%, à la viscosité apparente d'une mousse obtenue à partir de la composition C' dans les mêmes conditions.

Le test dit « de sandpack » auquel il est fait référence ci-dessus est un test bien connu de l'homme du métier, et qui consiste à mesurer la différence de pression $\Delta P$ aux bornes d'un milieu poreux modèle (sandpack).

La viscosité apparente ($\eta_{app}$) est calculée à partir de la différence de pression $\Delta P$ par la formule suivante :

$$\eta_{app} = \frac{k.\Delta P}{L.v_i \Phi}$$

où : k est la perméabilité du sandpack

L est la longueur du sandpack

$v_i$ est la vitesse intersticielle

$\Phi$ est la porosité du sandpack

Pour un polymère ou un mélange de polymère P donné, l'homme du métier peut aisément déterminer la quantité de polymère P à employer en effectuant tout d'abord le test de sandpack dans les conditions spécifiques précitées sur une composition sans polymère (correspondant à la composition C') puis en ajoutant des polymères P et en reproduisant le test dans les mêmes conditions, et en augmentant au besoin la quantité de polymère si une augmentation trop faible de la viscosité apparente est obtenue.

Selon un autre aspect, la présente invention a pour objet un procédé de récupération assistée du pétrole d'une formation souterraine, comprenant les étapes suivantes :

- on injecte une composition C du type précité dans ladite formation souterraine, par au moins un puits d'injection, ladite composition étant en présence d'un gaz (vapeur d'eau par exemple, diazote, $CO_2$ ou gaz hydrocarboné par exemple) au sein de la formation souterraine ; puis

- on récupère, par au moins un puits de production, un fluide véhiculant le pétrole sortant de la formation souterraine.

Dans le cadre de ce procédé, la présence conjointe de la composition C et d'un gaz (vapeur d'eau, diazote, $CO_2$ ou gaz hydrocarboné, notamment) dans la formation souterraine, propre à former une mousse, peut être obtenue selon différents modes, incluant notamment :

- la formation préalable d'une mousse par foisonnement de la composition C par un gaz et l'injection de cette mousse au sein de la formation souterraine ; ou

- l'injection conjointe de la composition C, sous forme non moussée, et du gaz au sein de la formation souterraine ; ou

- l'injection de la composition C au sein de la formation souterraine, suivie par l'injection d'un gaz qui sera ensuite mis en contact avec la composition C au sein de la formation souterraine ; ou

- l'injection de la composition C au sein d'une formation souterraine contenant préalablement un gaz (par exemple présent naturellement dans la formation et/ou injecté au préalable dans la formation).

Selon un mode de réalisation particulier, le procédé comprend :

- l'injection conjointe de la composition C, sous forme non moussée, et du gaz au sein de la formation souterraine ; et/ou
- l'injection de la composition C au sein de la formation souterraine, suivie par l'injection d'un gaz qui sera ensuite mis en contact avec la composition C au sein de la formation souterraine.

Selon un autre mode de réalisation, adapté notamment au d'une formation souterraine avec un réseau de fractures denses, le procédé comprend :

- la formation préalable d'une mousse par foisonnement de la composition C par un gaz et l'injection de cette mousse au sein de la formation souterraine ; et/ou

- l'injection conjointe de la composition C, sous forme non moussée, et du gaz au sein de la formation souterraine.

La composition C employée dans le procédé de l'invention est de préférence une composition telle que la viscosité apparente d'une mousse obtenue à partir de ladite composition C est supérieure d'au moins 10%, plus préférentiellement d'au moins 15%, voire d'au moins 20% à la viscosité apparente d'une mousse obtenue à partir de la composition C' telle que définie précédemment (à savoir la composition correspondant à la composition C privée de polymère P) lorsqu'on mesure ces viscosités apparentes à la température de la formation souterraine et dans les conditions de la formation souterraine.

Ainsi, typiquement, on emploie selon l'invention une composition C qui, lorsqu'elle est injectée au sein de la formation souterraine avec un gaz, avec une fraction de gaz de 0,9, induit une viscosité apparente supérieure d'au moins 10%, plus préférentiellement d'au moins 15%, voire d'au moins 20% à la viscosité apparente induite, dans les mêmes conditions par la composition C'.

On préfère par ailleurs que, dans les conditions de mise en oeuvre du procédé de l'invention, l'utilisation de la composition C induit une viscosité apparente supérieure d'au moins 10%, plus préférentiellement d'au moins 15%, voire d'au moins 20% à la viscosité apparente qui serait induite, dans les mêmes conditions par la composition C'.

Les résultats obtenus selon l'invention sont tout à fait inattendus. Certes, il était connu que l'addition d'un polymère peut permettre d'améliorer les performances d'une composition moussante en EOR. Cela étant, dans ce cadre, il a été préconisé par le passé l'ajout de polymères propres à augmenter drastiquement la viscosité de la composition moussante, dans la mesure où il était attendu qu'une telle augmentation de la viscosité induise *de facto* une augmentation de la viscosité apparente de la mousse, donc de la pression générée au sein d'un milieu poreux et, par conséquent, de l'efficacité de l'extraction. Contre toute attente, les inventeurs ont maintenant mis en évidence dans le cadre de la présente invention que les mousses formées à partir de compositions moussantes contenant les polymère P induisent une augmentation satisfaisante de la pression générée dans un milieu poreux tel qu'une roche ou une formation pétrolière, et ce même lorsqu'ils sont employés à des concentrations qui n'induisent pas une augmentation sensible de la viscosité de la composition C.

Cette possibilité est notamment très intéressante dans la mesure où les compositions moussantes C employées selon l'invention sont très fluides, donc très aisées à manipuler, à transporter et à doser. Un autre avantage -et non des moindres- est que les compositions C sont plus aisément injectables au sein d'une formation souterraine que des compositions plus visqueuses, en particulier dans les modes de réalisation où la composition est injectée sous une forme non moussée (à savoir non sous la forme d'une mousse préformée, mais sous une forme liquide, en vue de la formation d'une mousse in situ au sein de la formation souterraine).

De plus, les polymères P présentent un autre avantage, à savoir qu'ils tendent le plus souvent à favoriser la durabilité de la mousse obtenue à partir de la composition C. L'obtention d'une mousse durable est souvent clé dans les techniques de l'EOR employant une mousse car la mousse formée n'est pas régénérée au sein des formations souterraines.

Par ailleurs, la présence des polymères P tend avantageusement à ralentir l'assèchement de la mousse (le drainage de sa fraction liquide tend à se ralentir notamment du fait de la présence des polymères).

En outre, la présence du polymère induit en général une augmentation du temps de contact entre la mousse et le milieu poreux où elle est formée, ce qui, là encore, constitue un avantage propre à induire une amélioration des procédé d'extraction employant les compositions selon l'invention.

Différents modes de réalisation possibles de l'invention vont maintenant être décrits plus en détails.

## Les *polymères P*

Une composition C selon l'invention comprend au moins un polymère P à base d'unités acrylamides ou acrylamido et ayant une masse moléculaire moyenne en poids Mw allant de 1 000 000 à 20 000 000 g/mol. On peut éventuellement utiliser selon l'invention un mélange de plusieurs polymères de natures distinctes.

Des polymères P préférés selon l'invention sont les polymères suivants :

- les polyacrylamides, de préférences partiellement hydrolysés, dits HPAM, et plus généralement les copolymères comprenant (et typiquement consistant enà des unités acrylamide et des unités acide acrylique (issues ou non d'une hydrolyse de l'acrylamide) ;

- les polymères de l'acide 2-Acrylamido-2-MethylPropane Sulfonique (AMPS)

- les copolymères comprenant (et typiquement consistant en) des unités monomères acrylamide et des unités monomères AMPS

- les polymères comprenant des unités monomères acrylamide, des unités monomères AMPS et des unités N-vnylpyrolidone NVP (et typiquement les terpolymères constitués uniquement de telles unités monomères) ; et

- les mélange de ces polymères.

Des polymères bien adaptés selon l'invention sont notamment ceux qui font l'objet des exemples illustratifs donnés à la fin de la présente description.

Quelle que soit la nature exacte des polymères P employés dans la composition C, on préfère en général que la concentration totale en polymères à base d'unités acrylamides ou acrylamido dans la composition C soit inférieure ou égale à 2% en masse par rapport à la masse totale de la composition. Typiquement, la concentration totale en polymères à base d'unités acrylamides ou acrylamido dans la composition C est inférieure à 1,5 g/L. Un des avantages de l'invention est qu'elle autorise l'emploi des polymères à des concentrations très faibles, par exemple inférieures ou égales à 1% en masse, notamment inférieures ou égales à 0,5% en masse, la plupart des polymères pouvant être typiquement employés à des concentrations inférieures ou égales à 0,1%.

Ainsi, la concentration totale en polymères à base d'unités acrylamides ou acrylamido dans la composition C peut typiquement être comprise entre 0,001 et 2 % en masse, notamment entre 0,002 et 1 % en masse

**Les tensioactifs**

On peut employer selon l'invention tout tensioactif ou système de tensioactifs propre à former une mousse.

Typiquement, la teneur en tensioactifs au sein de la composition C est comprise entre 0,05% et 2% en masse par rapport à la masse totale de la composition C, par exemple entre 0,1 et 1% en masse par rapport à la masse totale de la composition.

A titre d'exemple de tensioactifs utilisables dans une composition C selon l'invention, on peut notamment citer les tensiaoctifs anioniques ci-après et les mélanges de tensioactifs comprenant de tels tensioactifs :

- les tensioactifs anioniques de type sulfonate,
  et notamment :

  ■ les sulfonates d'oléfines internes, de préférence des sulfonates d'oléfines internes en C15 à C28, par exemple en C20-24

  ■ les alkylarylsulfonate, et notamment les alkyl benzène sulfonate (ABS), où le groupe alkyle comporte de préférence au moins 15 atomes de carbone, par exemple entre 15 et 24 atomes de carbone, comme par exemple un alkyl aryl sulfonate avec un alkyl en C15-18

  ■ les sulfonates et/ou disulfonates de composés alpha-sulfocarbonyle tels que décrits notamment dans WO 2016/177817, comme par exemple des sulfonates et disulfonates dérivés de cétones internes en C15-C35

  ■ les sulfosuccinates et sulfosuccinamates

- les tensioactifs anioniques de type alkyl éther sulfates (dits aussi AES, ou alkyl sulfates alcoxylés), où le groupe alkyle comporte de préférence au moins 10 atomes de carbone, par exemple entre 10 et 16 atomes de carbone, préférentiellement des alkyl éther sulfates propoxylés et/ou éthoxylés contenant jusqu'à 40 groupements ethoxy et/ou jusqu'à 20 groupements propoxy, par exemple comprenant de 0 à 10 groupements ethoxy et 0 à 10 groupements propoxy (avec au moins un groupe ethoxy ou propoxy présent), comme par exemple un alkyl éther sulfate avec un groupe alkyl en C12-13 comprenant 7 groupements propoxylés.

- les tensioactifs anioniques de type alkyl glyceryl éther sulfonates (AGES), où le groupe alkyle comporte de préférence au moins 10 atomes de carbone, par exemple entre 10 et 16 atomes de carbone, ces AGES étant préférentiellement propoxylés et/ou éthoxylés, et contenant par exemple entre 0 et 20 groupements ethoxy et entre 0 et 10 groupements propoxy (avec au moins un groupe ethoxy ou propoxy présent).

- les tensioactifs anioniques de type alkyl éther carboxylates

- les mélanges de ces tensioactifs anioniques.

Selon un mode de réalisation intéressant, on peut par exemple utiliser selon l'invention un mélange de tensioactifs comprenant :

- au moins un premier tensioactif anionique de type sulfonate, de préférence du type précité ; et

- au moins un deuxième tensioactif anionique choisi parmi les alkyl éther sulfates (AES) ; les alkyl glyceryl éther sulfonates (AGES) ; les alkyl éther carboxylates ; et leurs mélanges, ce deuxième tensioactif étant de préférence choisi parmi les tensioactifs préférentiels précités.

Alternativement, on peut employer dans la composition C des tensioactifs cationiques, typiquement des tensioactifs porteurs de chaînes hydrocarbonées comprenant de 8 à 18 atomes de carbone et un groupe cationique typiquement de type ammonium.

Par ailleurs, une composition C selon l'invention comprend avantageusement des tensioactifs de type amphotère ou zwitterioniques, de préférence en mélange avec au moins un tensioactif anionique (ou alternativement au moins un tensioactif cationique).

Ainsi, selon un mode de réalisation possible, le tensioactif ou mélange de tensioactifs présent dans la composition C comprend au moins un tensioactif choisi parmi les alkylamidobétaines, les alkylamidohydroxysultaine, les alkylbétaines, et les alkylhydroxysultaines (dans tous ces tensioactifs la chaîne alkyle comprend avantageusement de 8 à 18 atomes de carbone), ou bien les mélanges de ces composés. A titre d'exemple, on peut par exemple citer la cocoamidohydroxypropyl sultaine. D'autres composés possibles sont les aminosulfonates qui font l'objet de la demande WO 2015/173052.

Par exemple, une composition C selon l'invention peut comprendre un mélange de tensioactif contenant au moins un tensioactif anionique, de préférence du type précité, et en particulier de type sulfonate et

- au moins un tensioactif de type zwitterionique ou amphotère, préférentiellement de type betaine ou sultaine, préférentiellement du type précité ; et/ou

- au moins un tensioactif non ionique, préférentiellement de type alcool éthoxylé, par exemple au moins un alcool éthoxylé avec des longueurs de chaînes alkyl comprenant de 8 à 18 atomes de carbone (typiquement au moins 12) et de 2 à 25 groupements éthoxyle (EO).

Selon un mode particulier, la composition C comprend au moins un tensioactif anionique de type sulfonate, de préférence du type précité, et au moins un tensioactif de type betaine ou sultaine, de préférence du type précité.

Dans ce cadre, selon une variante particulière, la composition C comprend au moins un tensioactif anionique de type sulfonate, de préférence du type précité ; au moins un tensioactif de type betaine ou sultaine, de préférence du type précité ; et au moins un tensioactif non ionique, de préférence au moins un alcool éthoxylé du type précité.

## Autres composés éventuels

Une composition C selon l'invention peut avantageusement comprendre un certains nombre d'additifs en plus des polymères et tensioactifs précités.

Ainsi, il s'avère notamment intéressant que le mileiu aqueux M d'une composition C selon l'invention comprenne des sels dissous (dans ce cas la composition C" est typiquement une saumure).

Le milieu aqueux M a de préférence une salinité similaire à celle de la formation souterraine où la composition C est destinée à être injectée, ce qui tend à améliorer l'efficacité de la récupération du pétrole.

Typiquement, la teneur totale en sels dans une composition C selon l'invention est avantageusement dans la gamme comprise entre 1 to 260 g/L, de préférence de 5 to 200 g/L. Une composition selon l'invention comprend en général plusieurs types de sels distincts et la concentration en sels à laquelle il est fait référence correspond à la quantité totale de tous les sels présents.

A titre de sels avantageusement présents dans la composition de l'invention, on peut notamment citer à titre non limitatif les halogénures des métaux alcalins et alcalino-terreux, tels que NaCl, KCl, MgCl2, $CaCl_2$. ou $CaSO_4$ , ou

bien ecore les sels de fer II comme $FeSO_4$ ou $FeCl_2$

**Utilisation des compositions selon l'invention**

Les compositions C selon l'invention sont notamment bien adaptées pour former des mousses ayant une fraction en gaz (fg) supérieure ou égale à 0,7, notamment supérieure ou égale à 0,8, par exemple supérieure à 1. Cette fraction en gaz correspond au volume de gaz rapporté à la somme des volumes de liquide et de gaz dans la mousse (et il est en pratique calculé par le rapport du débit volumique de gaz rapporté à la somme des débits volumiques de liquide et de gaz dans la mousse).

Ainsi, on peut typiquement utiliser une composition C en la co-injectant avec un gaz, avec un rapport du débit volumique de l'injection en gaz rapporté au débit volumique de l'injection en composition C supérieur aux valeurs précitées. Sachant qu'une mousse tend à s'assécher par drainage au sein de la formation, on peut toutefois employer des rapports de débit d'injection inférieurs (le fg croît au cours du temps : suite au drainage, la mousse tend à contenir de moins en moins de liquide).

Par ailleurs, les procédés de récupération assistée du pétrole employant les compositions C selon l'invention sont tout particulièrement bien adaptées pour des formations souterraines qui sont

- des réservoirs fracturés naturellement (typiquement des réservoirs à base de carbonates) ; et/ou
- des réservoirs présentant des problèmes de contrôle de mobilité de gaz, incluant l'existence de chemin préférentiel ; et/ou de zone voleuse ; et/ou de phénomènes de type « *gravity override* » ; et/ou d'hétérogénéité de perméabilité.

Les exemples donnés ci-après illustre des modes de réalisation non limitatifs de l'invention et certain de leurs avantages.

## EXEMPLES

Dans une solution à 5 g/L de NaCl (**saumure initiale**) on a ajouté les tensioactifs suivants dans les teneurs indiquées ci-dessous :

2,5 g/L de Rhodacal® A246-L (tensioactif anionique de type sulfonate)

2,5 g/L de Mackam CBS (alkylhydroxysultaine)

ce par quoi il a été obtenu une composition moussante de base (**Témoin**).

A partir de cette composition moussante de base, des compositions C1 à C7 ont été préparées, par ajout à ladite composition moussante de base d'un polymère utile selon l'invention a été ajouté (Flopaam FP 3130S ou Flopaam AN100 SH selon le cas), dans les quantités variables reportées dans le tableau ci-dessous (les teneurs sont exprimés en ppm et correspondent à des teneurs en masse par rapport à la masse totale de la composition considérée).

## Tableau 1 : compositions employées dans les exemples

| | saumure | Témoin | C1 | C2 | C3 | C4 | C5 | C6 | C7 |
|---|---|---|---|---|---|---|---|---|---|
| **NaCl** (g/L) | 5 | | | | | | | | |
| **A246-L** (g/L) | 0 | 2,5 | | | | | | | |
| **CBS** (g/L) | 0 | 2,5 | | | | | | | |
| **FP 3130S** (ppm) | 0 | 0 | 25 | 50 | 100 | 500 | 1000 | - | - |
| **AN100 SH** (ppm) | 0 | 0 | - | - | - | - | - | 100 | 500 |
| **Viscosité (mPa.s)** | 1,01 | 1,07 | 1,08 | 1,21 | 1,37 | 2,64 | 5,61 | 1,22 | 2,36 |

Les viscosités indiquées dans le tableau 1 correspondent à la viscosité propre de la composition liquide considérée, à l'état non moussée, mesurée à 25°C sous une contrainte de 10s$^{-1}$

Le témoin et les compositions C1 à C7 ont été utilisées séparément pour générer une mousse au sein d'un sandpack horizontal (verre 300-400μm) de perméabilité égale à 10 darcy, dans les mêmes conditions, à savoir en coinjectant la composition testée avec du diazote sous une pression d'injection de 50 bars (5.10$^6$ Pa). Les tests ont été effectués avec différentes fraction de gaz (fg), correspondant au rapport du débit volumique du diazote rapporté à la somme du débit volumique de la composition et du débit volumique du gaz lors de l'injection.

Pour chaque test, la différence de pression aux bornes du sandpack a été mesurée, et la viscosité apparente de la mousse formée à partir de chaque composition a été calculée à partir de cette différence de pression. Les valeurs de viscosité apparentes obtenues dans chaque cas sont reportées dans le tableau ci-dessous.

### Tableau 2 : viscosité apparente (en mPa.s) de la mousse formée pour différentes valeur de fg

| fg | 0,8 | 0,844 | 0,891 | 0,956 | 0,978 |
|---|---|---|---|---|---|
| **témoin** | 3,52 | 3,84 | 3,82 | 0,87 | 0,78 |
| **C1** | 2,93 | 3,60 | 3,93 | 3,22 | 3,13 |
| **C2** | 3,69 | 4,80 | 5,25 | 6,79 | 5,76 |
| **C3** | 3,83 | 4,27 | 4,96 | 6,60 | 5,60 |

(suite)

| fg | 0,8 | 0,844 | 0,891 | 0,956 | 0,978 |
|----|-----|-------|-------|-------|-------|
| C4 | 4,19 | 4,76 | 5,59 | 7,49 | 6,53 |
| C5 | 3,81 | 4,37 | 5,34 | 6,73 | |
| C6 | 4,32 | 5,23 | 5,97 | 7,77 | 6,45 |
| C7 | 4,27 | 5,16 | 6,34 | 8,74 | 7,70 |

**Revendications**

1.  Composition C, adaptée à titre de composition moussante pour l'EOR, qui comprend, au sein d'un milieu aqueux M :

    - un tensioactif ou un mélange de tensioactifs propre à la formation d'une mousse en présence d'un gaz ; et
    - un polymère P à base d'unités acrylamides ou acrylamido, ayant une masse moléculaire moyenne en poids $M_w$ allant de 1 000 000 à 20 000 000 g/mol ; ou un mélange de tels polymères P
    où :

    ▪ la composition C a une viscosité, telle que mesurée à 25°C sous un taux de cisaillement de $10s^{-1}$, qui est inférieure à 6 mPa.s (soit 6 cp) ;
    et
    ▪ en désignant par **C'** la composition identique à la composition C à la seule exception qu'elle ne contient pas de polymère P ; et par **C"** la composition identique à la composition C à la seule exception qu'elle ne contient pas de polymères P ni de tensioactif propre à la formation d'une mousse :

    (i) la teneur en polymère P dans la composition C est supérieure à la concentration limite au-delà de laquelle la viscosité apparente d'une mousse obtenue à partir de la composition C est supérieure d'au moins 10% à la viscosité apparente d'une mousse obtenue à partir de la composition C', au moins dans certaines conditions ; et
    (ii) de préférence la composition C' présente une viscosité telle que mesurée à 25°C sous un taux de cisaillement de $10s^{-1}$ inférieure au quadruple de la viscosité de la composition C".

2.  Composition selon la revendication 1, où la teneur en polymère P est telle que la viscosité apparente d'une mousse obtenue à partir de la composition C dans un test de sandpack:

    - effectué en co-injectant la composition à tester avec du diazote et avec une fraction en gaz de 0,9
    - employant un sable Ottawa de perméabilité supérieure à 1 darcy,
    - avec une contre-pression de 50 bars à une température de 25°C et à une vitesse intersticielle de 100ft/d

    est supérieure d'au moins 10%, de préférence d'au moins 15%, voire d'au moins 20%, à la viscosité apparente d'une mousse obtenue à partir de la composition C' dans les mêmes conditions.

3.  Composition selon la revendication 1 ou 2, qui contient à titre de polymère P au moins un polymère choisi parmi :

    - les polyacrylamides, de préférences partiellement hydrolysés, et les copolymères comprenant des unités acrylamide et des unités acide acrylique ;
    - les polymères de l'acide 2-Acrylamido-2-MethylPropane Sulfonique (AMPS)
    - les copolymères comprenant des unités monomères acrylamide et des unités monomères AMPS
    - les polymères comprenant des unités monomères acrylamide, des unités monomères AMPS et des unités N-vnylpyrolidone NVP ; et
    - les mélanges de ces polymères

4.  Composition selon l'une des revendications 1 à 3, où la concentration totale en polymères à base d'unités acrylamides ou acrylamido est inférieure ou égale à 2% en masse par rapport à la masse totale de la composition, cette concentration étant par exemple comprise entre 0,001 et 2 % en masse, notamment entre 0,002 et 1 % en masse.

5. Composition selon l'une des revendications 1 à 4, où la teneur en tensioactifs est comprise entre 0,05% et 2% en masse par rapport à la masse totale de la composition.

6. Composition selon l'une des revendications 1 à 5, comprenant un mélange de tensioactifs contenant au moins un tensioactif anionique, de préférence de type sulfonate et :

   - au moins un tensioactif de type zwitterionique ou amphotère, préférentiellement de type betaine ou sultaine ; et/ou
   - au moins un tensioactif non ionique, préférentiellement de type alcool éthoxylé les mélanges de ces tensioactifs anioniques.

7. Utilisation d'une composition selon l'une des revendications 1 à 6, pour former une mousse ayant de préférence une fraction en gaz (fg) supérieure ou égale à 0,7, notamment supérieure ou égale à 0,8, par exemple supérieure à 1.

8. Procédé de récupération assistée du pétrole d'une formation souterraine, comprenant les étapes suivantes :

   - on injecte une composition C selon l'une des revendications 1 à 6 dans ladite formation souterraine, par au moins un puits d'injection, ladite composition étant en présence d'un gaz (vapeur d'eau par exemple, diazote, $CO_2$ ou gaz hydrocarboné par exemple) au sein de la formation souterraine ; puis
   - on récupère, par au moins un puits de production, un fluide véhiculant le pétrole sortant de la formation souterraine.

9. Procédé selon la revendication 8, où la composition C est telle que lorsqu'elle est injectée au sein de la formation souterraine avec un gaz, avec une fraction de gaz de 0,9, induit une viscosité apparente supérieure d'au moins 10%, plus préférentiellement d'au moins 15%, voire d'au moins 20% à la viscosité apparente induite, dans les mêmes conditions par la composition C' identique à la composition C à la seule exception qu'elle ne contient pas de polymère P.

10. Procédé selon la revendication 9, où dans les conditions de mise en oeuvre du procédé de l'invention, l'utilisation de la composition C induit une viscosité apparente supérieure d'au moins 10%, plus préférentiellement d'au moins 15%, voire d'au moins 20% à la viscosité apparente qui serait induite, dans les mêmes conditions par la composition C' identique à la composition C à la seule exception qu'elle ne contient pas de polymère P.

**Europäisches Patentamt**
**European Patent Office**
**Office européen des brevets**

# RAPPORT DE RECHERCHE EUROPEENNE

Numéro de la demande

EP 19 15 8711

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/292355 A1 (VAN BATENBURG DIEDERIK WILLEM [NL] ET AL) 12 octobre 2017 (2017-10-12) | 1-5,8-10 | INV. C09K8/584 C09K8/588 C09K8/594 |
| Y | * alinéa [0027] - alinéa [0029] * * revendications * | 6,7 | |
| Y,D | WO 2015/173052 A1 (RHODIA OPERATIONS [FR]) 19 novembre 2015 (2015-11-19) * exemples * | 6,7 | |
| X | US 5 780 395 A (SYDANSK ROBERT D [US]) 14 juillet 1998 (1998-07-14) * revendications * * exemples * * colonne 4, ligne 24 - ligne 31 * * colonne 6, ligne 25 - ligne 34 * | 1-10 | |
| X | US 5 129 457 A (SYDANSK ROBERT D [US]) 14 juillet 1992 (1992-07-14) * exemple 1 * * revendication * | 1-10 | |
| A | US 2014/174735 A1 (SOUTHWICK JEFFREY GEORGE [US] ET AL) 26 juin 2014 (2014-06-26) * revendications * * alinéa [0045] - alinéa [0046] * * exemples * | 1-10 | DOMAINES TECHNIQUES RECHERCHES (IPC) C09K |
| A | FR 2 920 818 A1 (SNF SAS SOC PAR ACTIONS SIMPLI [FR]) 13 mars 2009 (2009-03-13) * le document en entier * | 1-10 | |

Le présent rapport a été établi pour toutes les revendications

| Lieu de la recherche | Date d'achèvement de la recherche | Examinateur |
|---|---|---|
| Munich | 2 juillet 2019 | Zimpfer, Emmanuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 19 15 8711

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-07-2019

| Document brevet cité au rapport de recherche | | Date de publication | Membre(s) de la famille de brevet(s) | | Date de publication |
|---|---|---|---|---|---|
| US 2017292355 | A1 | 12-10-2017 | AUCUN | | |
| WO 2015173052 | A1 | 19-11-2015 | EP | 3143097 A1 | 22-03-2017 |
| | | | FR | 3021052 A1 | 20-11-2015 |
| | | | US | 2017107421 A1 | 20-04-2017 |
| | | | WO | 2015173052 A1 | 19-11-2015 |
| US 5780395 | A | 14-07-1998 | AU | 648793 B2 | 05-05-1994 |
| | | | BR | 9106641 A | 08-06-1993 |
| | | | CA | 2083054 C | 31-01-1995 |
| | | | CN | 1058798 A | 19-02-1992 |
| | | | DE | 4191771 T | 13-05-1993 |
| | | | EG | 19485 A | 29-06-1995 |
| | | | GB | 2260353 A | 14-04-1993 |
| | | | IE | 911581 A1 | 12-02-1992 |
| | | | NL | 9120019 A | 01-04-1993 |
| | | | NO | 302142 B1 | 26-01-1998 |
| | | | RO | 112774 B1 | 30-12-1997 |
| | | | RU | 2062864 C1 | 27-06-1996 |
| | | | TN | SN91071 A1 | 25-10-1992 |
| | | | US | 5105884 A | 21-04-1992 |
| | | | US | 5780395 A | 14-07-1998 |
| | | | WO | 9202708 A1 | 20-02-1992 |
| US 5129457 | A | 14-07-1992 | AU | 1271492 A | 06-10-1992 |
| | | | CA | 2096118 A1 | 12-09-1992 |
| | | | CN | 1064729 A | 23-09-1992 |
| | | | EG | 19282 A | 29-06-1995 |
| | | | GB | 2266325 A | 27-10-1993 |
| | | | NO | 302911 B1 | 04-05-1998 |
| | | | RO | 111958 B1 | 31-03-1997 |
| | | | RU | 2071554 C1 | 10-01-1997 |
| | | | TN | SN92019 A1 | 08-06-1993 |
| | | | US | 5129457 A | 14-07-1992 |
| | | | WO | 9215769 A1 | 17-09-1992 |
| US 2014174735 | A1 | 26-06-2014 | CA | 2892944 A1 | 03-07-2014 |
| | | | CN | 104870600 A | 26-08-2015 |
| | | | EP | 2938698 A1 | 04-11-2015 |
| | | | RU | 2015130668 A | 30-01-2017 |
| | | | US | 2014174735 A1 | 26-06-2014 |
| | | | WO | 2014105591 A1 | 03-07-2014 |
| FR 2920818 | A1 | 13-03-2009 | BR | PI0816159 A2 | 24-02-2015 |
| | | | CA | 2698785 A1 | 09-04-2009 |
| | | | CN | 101802128 A | 11-08-2010 |

Pour tout renseignement concernant cette annexe : voir Journal Officiel de l'Office européen des brevets, No.12/82

EPO FORM P0460

page 1 de 2

**ANNEXE AU RAPPORT DE RECHERCHE EUROPEENNE
RELATIF A LA DEMANDE DE BREVET EUROPEEN NO.**

EP 19 15 8711

02-07-2019

| Document brevet cité au rapport de recherche | Date de publication | Membre(s) de la famille de brevet(s) | | Date de publication |
|---|---|---|---|---|
| | | EP | 2190943 A2 | 02-06-2010 |
| | | FR | 2920818 A1 | 13-03-2009 |
| | | HU | E031433 T2 | 28-07-2017 |
| | | US | 2010197529 A1 | 05-08-2010 |
| | | WO | 2009044075 A2 | 09-04-2009 |

EPO FORM P0460

page 2 de 2

**EP 3 699 255 A1**

## RÉFÉRENCES CITÉES DANS LA DESCRIPTION

**Documents brevets cités dans la description**

- WO 2016177817 A
- WO 2015173052 A